# EUROPÄISCHE PATENTSCHRIFT

(11) **EP 4 222 361 B1**
(45) Veröffentlichungstag und Bekanntmachung des Hinweises auf die Patenterteilung: **26.11.2025**
(21) Anmeldenummer: 21755350.2
(22) Anmeldetag: 04.08.2021
(51) Int. Cl.: F02C 3/14, F23R 3/42, F02C 3/34

(54) **VERFAHREN UND VORRICHTUNG ZUR REKURSIVEN SEQUENTIELLEN VERBRENNUNG**
METHOD AND DEVICE FOR RECURSIVE SEQUENTIAL COMBUSTION
PROCÉDÉ ET DISPOSITIF DE COMBUSTION SÉQUENTIELLE RÉCURSIVE

(30) Priorität: 01.10.2020 AT 508442020
(43) Veröffentlichungstag der Anmeldung: 09.08.2023
(73) Patentinhaber: Combustion Bay One E.U., 8010 Graz (AT)
(72) Erfinder: GIULIANI, Fabrice Louis Michel, 8010 Graz (AT)
(74) Vertreter: Wildhack & Jellinek Patentanwälte GmbH
(86) Internationale Anmeldenummer: PCT/AT2021/060270
(87) Internationale Veröffentlichungsnummer: WO 2022/067359

(56) Entgegenhaltungen:
- DE-A1- 102010 023 816
- DE-A1- 2 301 865
- US-A- 5 946 902
- US-A1- 2014 260 305

## Beschreibung

Die Erfindung betrifft ein Verfahren zur gleichmäßigen Verbrennung von Treibstoff gemäß dem Oberbegriff des Patentanspruchs 1 sowie eine Vorrichtung zur gleichmäßigen Verbrennung von Treibstoff gemäß dem Oberbegriff des Patentanspruchs 8.

Die Erfindung betrifft einen Gasbrenner bzw. eine Brennkammer, wie sie beispielsweise in Gasturbinen oder Triebwerken Anwendung findet. Aus dem Stand der Technik sind beispielsweise Flugzeugturbinen oder Gasturbinen bekannt, bei denen Treibstoff in einem in einer Brennkammer angeordneten Brenner verbrannt wird und dann beispielsweise einer Turbine zugeführt bzw. für den Vortrieb des Fluggeräts genutzt wird.

Aus der DE 23 01 865 A1 (LINDE ROBERT VON DIPL ING) vom 18. Juli 197 ist ein Verfahren zur gleichmäßigen rekursiven sequentiellen Verbrennung von Treibstoff und Oxidationsmittel innerhalb eines thermischen Systems mit kontinuierlicher Strömung bekannt. Bei diesem wird verdichtete Frischluft durch die Brennkammer entlang einer Hauptströmrichtung hindurch geleitet und strömt über einen Brennkammereingang in die Brennkammer ein und über einen Brennkammerausgang wieder aus. Ein Anteil der Frischluft wird dem Brenner über einen Brennereingang zugeführt und in dem jeweiligen Brenner mit Treibstoff verbrannt und als Abgas aus dem jeweiligen Brenner an einem Brennerausgang ausgebracht.

US 2014/260305 A1 (HOBBS JOSEPH L [GB] ET AL) vom 18. September 2014 offenbart eine Brennkammer mit Rezirkulation aber ohne Brenner.

Aus der US 5 946 902 A (SCHUETZ HERBERT [DE] ET AL) vom 7. September 1999 und der DE 10 2010 023816 A1 (ROLLS ROYCE DEUTSCHLAND [DE]) vom15. Dezember 2011 sind eine Gas-Turbinen bekannt in denen die Brenner in einer zur Strömungsrichtung geneigten Anordnung angeordnet sind, die dem Strömungsmedium einen Drall aufzwingen.

Der Nachteil, der aus dem Stand der Technik bekannten Triebwerke und Gasturbinen liegt darin, dass diese einen hohen Grad an Emissionen erzeugen, wobei insbesondere der in den Abgasen enthaltene Feinstaub und Ruß Umweltschäden verursacht. Weiters wird in dem Abgas ein hoher Anteil von Stickoxiden (NO_{X}) erzeugt, die den Treibhauseffekt fördern bzw. sich negativ auf die Gesundheit und Umwelt auswirken. Insbesondere bei Flugzeugtriebwerken gibt es derzeit keine Lösungen, die erzeugten Stickoxide zu verringern bzw. wie bei Automobilen beispielsweise durch einen Katalysator binden oder abfangen.

Aufgabe der vorliegenden Erfindung ist es daher, eine umweltfreundlichere Verbrennung für Triebwerke oder Gasturbinen bereitzustellen, die einen geringeren Stickoxidausstoß ermöglichen und daher umweltfreundlicher betrieben werden können.

Diese Aufgabe wird durch die kennzeichnenden Merkmale des Anspruchs 1 gelöst. Erfindungsgemäß ist dabei vorgesehen, dass der zumindest eine Brenner derart, insbesondere in einem Winkel, zur Hauptströmrichtung des Frischluftstroms, insbesondere geneigt, angeordnet ist, dass ein Teil des aus dem jeweiligen Brennerausgang austretenden Abgases in der Brennkammer eine tangentiale Strömung zur Hauptströmrichtung erfährt und in der Brennkammer zirkuliert und mit der in den Brenner einströmenden Frischluft vermengt in den Brennereingang des, insbesondere nachgeordneten, Brenners eintritt, sodass eine rekursive sequenzielle Verbrennung erreicht wird.

Durch die erfindungsgemäße Ausbildung der Brenner, insbesondere der Anordnung der Brenner in einem Winkel zur Hauptströmrichtung des Frischluftstroms, wird innerhalb der Brennkammer eine tangentiale Bewegung bzw tangentiale Strömung der aus den Brennern austretenden Abgase erreicht, sodass ein Anteil der Abgase innerhalb der Brennkammer zirkulieren. Durch die Zirkulierung der Abgase innerhalb der Brennkammer wird sodann ein Teil der bereits aus den Brennern austretenden Abgase einem weiteren Brenner an dessen Brennereingang zugeführt und derart das bereits verbrannte Abgas neuerlich mit Frischluft vermischt und einer weiteren Verbrennung zugeführt. Durch diese Merkmale wird erfindungsgemäß eine sogenannte rekursive sequentielle Verbrennung erreicht, bei der einerseits durch einen Verdünnungseffekt des Sauerstoffs, bei dessen Verbrennung zu CO₂ und H₂O, sowie die Verbrennungsprodukte CO₂ und H₂O weiters einen gewissen Wärmeanteil absorbieren und derart die Bildung von Stickoxiden deutlich reduziert wird. Weiters wird beispielsweise in der vorherigen Verbrennung gebildeter Stickstoffmonoxid mit freien OH-Gruppen zu Stickstoff und Wasser weiter reagiert. Als weiterer Effekt der erfindungsgemäßen Merkmale hat sich herausgestellt, dass durch die erfindungsgemäße rekursive Verbrennung der Abgase Treibstoff gespart und die Effizienz der Verbrennung erhöht wird. Weiters wird die Bildung von Abgasen beispielsweise Kohlendioxid, Stickoxide und Ruß reduziert, da in den Brennern eine sogenannte magere Verbrennung stattfinden kann und so eine längere Laufbahn der zirkulierten Abgase in der Brennkammer erlaubt und so eine vollständige Verbrennung und Reduktion von Ruß ermöglicht wird. Besonders vorteilhafte Ausführungsformen des erfindungsgemäßen Verfahrens werden durch die Merkmale der abhängigen Ansprüche näher definiert:
So kann erfindungsgemäß in einer bevorzugten Ausführungsform vorgesehen sein, dass die Brennkammer derart in Form eines in sich geschlossenen, insbesondere torusförmigen oder ringförmigen oder schleifenförmigen, Strömungskanals ausgebildet ist, dass sich in der Brennkammer eine Zirkularströmung ausbildet, wobei insbesondere vorgesehen ist, dass die Achse der Brennkammer koaxial mit der Hauptströmrichtung des Frischluftstromes angeordnet ist. Durch die Erzeugung einer Zirkularströmung innerhalb eines in der Brennkammer bzw. der als Brennkammer ausgebildeten Strömungskanals wird erreicht, dass die Abgase sich innerhalb der Brennkammer mit dem Frischluftstrom vermischen und derart effektiv den Brennern eine Mischung aus Frischluft und Abgasen zugeführt werden kann.

Als Strömungskanal wird in Verbindung mit den zuvor genannten Merkmalen verstanden, dass dem Abgasstrom bzw. dem mit der Frischluft vermischten Abgasstrom eine Zwangsströmung innerhalb der Brennkammer aufgezwungen werden kann, wobei der zuvor genannte Strömungskanal nicht allein in physischer Form eines Kanals ausgebildet sein muss, sondern alternativ auch durch Strömungsleitelemente ausgebildet sein kann.

Bevorzugt kann vorgesehen sein, dass die Brennkammer eine Anzahl von Teilsegmenten, insbesondere Kreissegmenten, aufweist, wobei jedes Teilsegment jeweils einen Brenner aufweist, und wobei jeweils ein Teil des vom jeweiligen Brenner erzeugten Abgases jeweils in ein benachbartes Teilsegment geleitet wird und der restliche Anteil des Abgases über den Brennkammerausgang aus der Brennkammer abgeführt wird.

Eine besonders einfache Ausführungsform des Verfahrens kann bereitgestellt werden, indem die Brennkammer zumindest zwei Brenner, insbesondere eine Vielzahl von Brennern, aufweist, die derart sequenziell zueinander angeordnet sind, dass jeweils ein Teil des Abgases des vorangehend angeordneten Brenners in den Brennereingang des jeweiligen Brenners einströmt, wobei das aus dem Brennerausgang des zuletzt angeordneten Brenners austretende Abgas in den Brennereingang des zuerst angeordneten Brenners einströmt. So kann beispielsweise die Anordnung der Brenner in einem Winkel zur Hauptströmrichtung der Frischluft so erfolgen, dass ein Teil des Querschnitts des Brennerausgangs eines zuvor angeordneten Brenners sich mit dem Brennereingang eines nachgeordneten Brenners überschneidet und derart das Abgas eines Brenners in den Brennereingang des nächsten in tangentialer Richtung nachgeordneten Brenner usw. zugeführt werden kann.

Um besonders vorteilhaft eine stabilisierte Flamme zu erhalten, kann vorgesehen sein, dass der Brenner, insbesondere Helix-förmig ausgebildet ist und, einen Querschnitt in Form einer doppelten Spirale aufweist, wobei die, insbesondere mit einem Teil des Abgases vermischte, Frischluft am Brennereingang des Brenners spiralförmig in das Zentrum des Brenners geleitet wird, wobei der Treibstoff durch Injektionsöffnungen im Bereich des Zentrums des spiralförmig ausgebildeten Brenners eingespritzt und mit der Frischluft verbrannt wird, und wobei das Abgas spiralförmig aus dem Zentrum des spiralförmig ausgebildeten Brenners zum Brennerausgang geleitet wird. Durch die spiralförmige Ausbildung der Brenner in Form einer doppelten Spirale wird ein besonders vorteilhafter Druckverlust innerhalb des Brenners erreicht, der ein bekannter Wert für die Qualität von Flammrohren ist, der insbesondere bei ca. 5% des Einlassdrucks liegt. Weiters wird durch die Ausbildung des Brenners in Form einer doppelten Spirale am Brennereingang durch die Versperrung des Weges bzw. die spiralförmige Umlenkung eine Beschleunigung der Frischluft bzw. der mit dem Abgas vermischten Frischluft erreicht, sodass beispielsweise Geschwindigkeiten von ca. 50m/s an der Wand entlang erreicht werden können. Weiters wird vorteilhaft durch die hohe Geschwindigkeit der Frischluft verhindert, dass die Flamme in den Brenner bzw. den Brennereingang Rückläuft bzw. die zirkulierende Luft die Flamme stabilisiert. Dies hat die weiteren Vorteile, dass einerseits die Wand des Brenners durch die frische Luft gekühlt wird. Die Frischluft bzw. die mit dem Abgas vermischte Frischluft wird schnell ins Zentrum des Brenners geführt sowie dadurch weiters eine Verwirbelung der Frischluft, des Abgases und des zu verbrennenden Treibstoffs vorteilhaft bewirkt.

Besonders vorteilhaft kann vorgesehen sein, dass sich die Spiralachse des Brenners zumindest entlang eines Teils der Querschnittsachse, insbesondere entlang der gesamten Querschnittsachse, des Brennraums erstreckt. So kann beispielsweise der zuvor genannte doppelt ausgebildete Brenner die gesamte Brennkammer zum Beispiel in Form eines in sich geschlossenem Kreisrings ausbilden. So wird durch die doppelte Spiralausbildung des Brenners im Zentrum der Spirale eine Zirkularströmung erreicht, die sodann eine Vermischung der bereits verbrannten Abgase mit der Frischluft erzeugt und derart effektiv eine rekursive sequentielle Verbrennung erzeugen kann.

Besonders vorteilhaft kann vorgesehen sein, dass das Verhältnis, insbesondere das Impulsstromverhältnis, zwischen der in den Brenner eintretenden Frischluft zum in den Brenner geleiteten Abgas zwischen 1:1 bis 20:1, insbesondere 2:1 bis 10:1, besonders bevorzugt 5:1 beträgt. Das Impulsstromverhältnis ist dabei der Massendurchfluss mal der Durchflussgeschwindigkeit durch die Querschnittsfläche geteilt.

Ein weiterer Aspekt der vorliegenden Erfindung sieht vor, eine Vorrichtung zur Durchführung des Verfahrens bzw. eine Vorrichtung, mit der das erfindungsgemäße Verfahren einfach durchgeführt werden kann, bereitzustellen. Weiters ist es Aufgabe eine Vorrichtung bereit zu stellen mit der Turbinen und Gasturbinen umweltfreundlicher betrieben werden können. Diese Aufgabe wird mit den kennzeichnenden Merkmalen des Anspruchs 8 gelöst. Erfindungsgemäß ist dabei vorgesehen, dass der zumindest eine Brenner derart, insbesondere in einem Winkel zur Hauptströmrichtung der Vorrichtung, vorzugsweise geneigt, angeordnet ist, dass ein Teil des aus dem jeweiligen Brennerausgang austretenden Abgases in der Brennkammer eine tangentiale Strömung zur Hauptströmrichtung erfährt und in der Brennkammer zirkuliert und mit der in den Brenner einströmenden Frischluft vermengt in den Brennereingang des, insbesondere nachgeordneten, Brenners eintritt, sodass eine rekursive sequenzielle Verbrennung erreicht wird.

Durch die erfindungsgemäße Vorrichtung wird, wie bereits zum Verfahren beschrieben, eine besonders effektive Verbrennung des Treibstoffs erreicht, sodass der Ausstoß von klimaschädlichen bzw. gesundheitsschädlichen Gasen, Feinstaub und Rußpartikeln reduziert wird und darüber hinaus Treibstoff gespart werden kann.

Besonders vorteilhafte Ausführungsformen der erfindungsgemäßen Vorrichtungen werden durch die Merkmale der abhängigen Ansprüche näher definiert:
So ist beispielsweise vorgesehen, dass die Brennkammer derart in Form eines in sich geschlossenen, insbesondere torusförmigen oder ringförmigen oder schleifenförmigen, Strömungskanals ausgebildet ist, dass sich in der Brennkammer eine Zirkularströmung ausbildet, wobei insbesondere vorgesehen ist, dass die Achse der Brennkammer koaxial mit der Hauptströmrichtung der Vorrichtung angeordnet ist. Durch die Ausbildung der Brennkammer in Form einer in sich geschlossenen Struktur, insbesondere ringförmigen, schleifenförmigen Strömungskanals, kann besonders effektiv eine Zirkularströmung innerhalb der Brennkammer erreicht werden, sodass die in die Brennkammer eintretende Frischluft einfach und besonders effektiv mit den Abgasen der bereits durch den Brenner verbrannten Treibstoffe erzielt werden kann. Im Zusammenhang mit der Erfindung ist der Begriff Strömungskanal nicht derart einschränkend zu verstehen, dass nur eine geschlossene Struktur als sogenannter Strömungskanal dienen kann, sondern kann jede beliebige Ausbildung der Brennkammer verstanden werden, die es erlaubt, eine definierte Strömung zu erzeugen. So kann beispielsweise die Brennkammer geschlossen oder auch offen ausgebildet sein, solange sich innerhalb der Brennkammer eine sogenannte Zirkularströmung, also eine Strömung zumindest eines Teils des Abgases quer zur Achse des Frischluftstroms bzw. quer zur Hauptströmungsrichtung des Frischluftstroms in der Brennkammer, erzeugen lässt.

Bevorzugt kann vorgesehen sein, dass die Brennkammer eine Anzahl von Teilsegmenten, insbesondere Kreissegmenten, aufweist, wobei jedes Teilsegment jeweils einen Brenner umfasst, und wobei die Brennkammer derart, ausgebildet ist, dass ein Teil des vom jeweiligen Brenner erzeugten Abgases, insbesondere mittels der als Strömungskanal ausgebildeten Brennkammer oder mittels Strömungsleitelementen, jeweils in ein benachbartes Teilsegment leitbar ist und der restliche Anteil des Abgases über den Brennkammerausgang aus der Brennkammer abführbar ist.

Eine besonders bevorzugte Ausführungsform kann bereitgestellt werden, indem die Brennkammer zumindest zwei Brenner, insbesondere eine Vielzahl von Brennern, aufweist, die derart sequenziell zueinander angeordnet sind, dass jeweils ein Teil des Abgases des vorangehend angeordneten Brenners in den Brennereingang des diesem jeweils nachgeordnetem Brenners einströmt, wobei das aus dem Brennerausgang des zuletzt angeordneten Brenners austretende Abgas in den Brennereingang des zuerst angeordneten Brenners einströmt.

Bei einer derartigen Anordnung von mehreren Brennern kann beispielsweise der vorhergehende Brenner mit dessen Brennerausgang einen Bereich des Brennereingangs des nachfolgenden Brenners überdecken, sodass die aus dem ersten Brenner austretenden Abgase einfach dem zweiten Brenner bzw. diesem nachgeordneten Brenner zugeführt werden können.

Besonders bevorzugt kann vorgesehen sein, dass der Brenner, insbesondere Helix-förmig ausgebildet ist und, einen Querschnitt in Form einer doppelten Spirale aufweist, wobei der Brenner derart spiralförmig ausgebildet ist, dass die, insbesondere mit einem Teil des Abgases vermischte, Frischluft am Brennereingang des Brenners spiralförmig in das Zentrum des Brenners leitbar ist, wobei der Treibstoff durch Injektionsöffnungen im Bereich des Zentrums der spiralförmig ausgebildeten Brenners einspritzbar und mit der Frischluft verbrennbar ist, und wobei das Abgas spiralförmig aus dem Zentrum des spiralförmig ausgebildeten Brenners zum Brennerausgang leitbar ist.

Wie bereits zum Verfahren genannt, kann die bevorzugte Ausbildung der Brenner in Form einer doppelten Spirale vorteilhaft dazu genutzt werden, eine besonders effektive Verbrennung sowie Durchmischung der Frischluft mit den Abgasen zu erreichen und weiters die Geschwindigkeitsprofile und Druckverhältnisse innerhalb des Brenners besonders vorteilhaft erzeugt werden.

Hierzu ist insbesondere vorgesehen, dass sich die Spiralachse des Brenners zumindest entlang eines Teils der Querschnittsachse, insbesondere entlang der gesamten Querschnittsachse, der Brennkammer erstreckt. Durch die Ausbildung des spiralförmigen Brenners bzw. der gesamten Brennkammer in Form einer doppelten Spirale wird eine besonders vorteilhafte Zirkularströmung im Zentrum der Doppelspirale erreicht, wodurch die Zirkulation der Abgase innerhalb des Zentrums der doppelspiralförmigen Brenner bzw. der doppelspiralförmig gebildeten Brennkammer erreicht wird.

In einer bevorzugten Ausführungsform kann vorgesehen sein, dass ein Triebwerk bzw. eine Gasturbine eine erfindungsgemäße Vorrichtung umfasst.

Weitere Vorteile und Ausführungsformen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:
Fig. 1 zeigt eine erste Ausführungsform der erfindungsgemäßen Vorrichtung in schematischer Ansicht,
Fig. 2 zeigt eine vereinfachte Ausführungsform einer Brenneranordnung gemäß Fig. 1,
Fig. 3 zeigt eine zweite Ausführungsform einer erfindungsgemäßen Vorrichtung in schematischer Darstellung,
Fig. 4 zeigt eine schematische Ansicht mit mehreren Teilsegmenten gemäß,
Fig. 5 zeigt eine schematische Ansicht eines Teilsegments der Brennkammer Fig. 4,Fig. 6 zeigt eine Ausführungsform des Brenners als Doppelspirale,
Fig. 7 zeigt eine schematische Darstellung der Strömungszustände innerhalb des als Doppelspirale ausgebildeten Brenners,
Fig. 8 zeigt eine bevorzugte Ausführungsform der Brennkammer als doppelte Spirale,
Fig. 9 bis Fig. 12 zeigen Ausführungsformen der erfindungsgemäßen Vorrichtung mit unterschiedlicher Ausbildung der Teilsegmente,
Fig. 13 zeigt eine schematische Ansicht des Zirkularstroms mit unterschiedlichen Teilsegmenten,
Fig. 14 zeigt eine weitere Ausführungsform von möglichen Teilsegmenten,
Fig. 15 bis Fig. 17 zeigen eine Ausführungsform der Brennkammer mit drei Brennern, und Fig. 18 zeigt ein Ausfuhrungsbeispiel eines als Zyklon ausgebildeten erfindungsgemaßen Brenners bzw. eine als Drallerzeuger, zyklonförmig ausgebildete Mischkammer eines Brenners,
Fig. 19 zeigt eine Draufsicht auf den Zyklon aus Fig. 18.
Fig. 20 eine Ansicht des Zyklons aus Fig. 19 von unten und
Fig. 21 bis 30 zeigen alternative Ausführungsformen der schematischen Darstellung der Fig. 9 bis 14 mit einer Brennkammer mit unterschiedlich ausgebildeten Teilsegmenten.

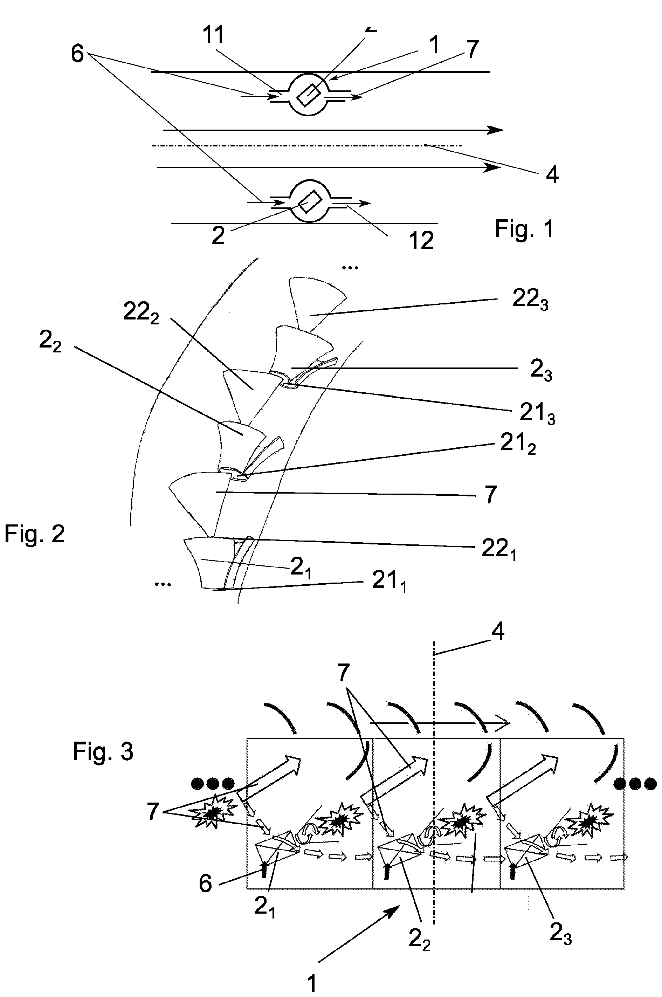

In Fig. 1 ist eine erste Ausführungsform der erfindungsgemäßen Vorrichtung in schematischer Ansicht dargestellt. Die Vorrichtung umfasst eine Brennkammer 1, die innerhalb der Vorrichtung beispielsweise einem Triebwerk oder einer Gasturbine angeordnet ist. Durch die Vorrichtung wird Frischluft 6 entlang einer Hauptströmungsrichtung 4 hindurch geleitet, wobei ein Anteil der Frischluft 6 durch einen Brennkammereingang 11 in die Brennkammer 1 einströmt. In der Brennkammer 1 ist eine Anzahl von Brennern 2 angeordnet, in denen die Frischluft 6 über einen Brennereingang 21 dem Brenner 2 zugeführt wird. In dem Brenner 2 wird die Frischluft 6 mit Treibstoff verbrannt. Aus dem Brenner 2 tritt der verbrannte Treibstoff dann als Abgas 7 an dem Brennerausgang 22 aus. Die Brenner 2 sind dabei derartig in einem Winkel zur Hauptströmrichtung 4 des Frischluftstroms 6 bzw der Vorrichtung geneigt angeordnet, dass ein Teil des aus dem jeweiligen Brennerausgangs 22 austretenden Abgases 7 in der Brennkammer 1 eine tangentiale Strömung zur Hauptströmrichtung 4 erfährt und in der Brennkammer 1 zirkuliert. Die zirkulierenden Abgase 7 innerhalb der Brennkammer 1 werden derart mit der einströmenden Frischluft 6 vermengt und wieder in den Brennereingang 21 eines Brenners 2 bzw. des einen Brenners 2 eingeleitet. Über den Brennkammerausgang 12 strömt ein Teil des verbrannten Abgases 7 aus der Brennkammer 1 hinaus und wird der weiteren Verarbeitung beispielsweise einer Turbine zugeführt. Durch die Vermischung der aus dem Brennerausgang 22 austretenden Abgase 7 mit der in den Brenner 2 einströmenden Frischluft 6 und der neuerlichen Zuführung der mit dem Abgas 7 vermischten Frischluft 6 wird eine sogenannte rekursive sequentielle Verbrennung erreicht, bei der die Bildung von Stickoxiden reduziert wird und Feinstaub oder Rußpartikel weiter verbrannt werden, sodass eine umweltfreundlichere schadstoffarme Verbrennung bewirkt wird.

Fig. 2 zeigt eine schematische Anordnung von mehreren Brennern 2. Die Brenner 2 sind in Bezug auf die Hauptströmrichtung 4 in einem Winkel zu dieser geneigt, sodass jeweils das aus dem vorangehenden Brenner 2₁ ausströmende Abgas 7 in den Brennereingang 21₂ des zweiten Brenners 2₂ eintritt, in diesem erneut mit Frischluft 6 vermengt wird und weiter verbrannt wird. Das aus dem zweiten Brenner 2₂ austretende Abgas 7 wird wieder teilweise diesem nachfolgenden Brenner 2₃ zugeführt und dort wieder mit Frischluft 6 vermischt verbrannt. Durch die in Fig. 2 dargestellte Ausführungsform wird eine teilweise Überdeckung des Brennerausgangs 22ₙ eines jeweiligen Brenners 2ₙ mit dem Brennereingang 21ₙ₊₁ des nachfolgenden Brenners 2ₙ₊₁ bewirkt, sodass ein Teil des Abgases 7 jeweils dem nachfolgenden Brenner 2ₙ₊₁ zugeführt wird. Durch diese Anordnung wird weiters eine Zirkularströmung innerhalb der Brennkammer 1 der Abgase 7 erreicht, sodass diese einfach den nachfolgenden Brennern 2ₙ₊₁ bzw. einer erneuten rekursiven Verbrennung zugeführt werden können.

Fig. 3 zeigt eine weitere Ausführungsform der erfindungsgemäßen Vorrichtung in schematischer Ansicht. Die Brenner 2 sind jeweils in einem Winkel zur Hauptströmrichtung 4 geneigt bzw. in einem Winkel angeordnet, sodass ein Teil der Abgase innerhalb der Brennkammer 1 eine tangentiale Strömung erfährt und den jeweiligen nachfolgenden Brennern 2 zugeführt wird, um derart wieder eine rekursive sequentielle Verbrennung zu erreichen. Die Brennkammer 1 ist bei den in Fig. 1 bis 3 dargestellten Ausführungsformen als Strömungskanal ausgebildet, wobei der Begriff Strömungskanal nicht einschränkend zu verstehen ist, sondern lediglich durch die Ausbildung der Brennkammer 1 bzw. der als Strömungskanal ausgebildeten Brennkammer 1 ein Anteil des Abgases 7 innerhalb der Brennkammer 1 zirkulieren kann. Dies kann beispielsweise wie in Fig. 2 dargestellt, durch einen festen durch Wände begrenzten Strömungskanal oder, wie in Fig. 3 dargestellt, beispielsweise durch Leitbleche oder Leitschaufeln, die den Abgasstrom ableiten und dazu zu einer zirkulierenden Strömung zwingen, erreicht werden.

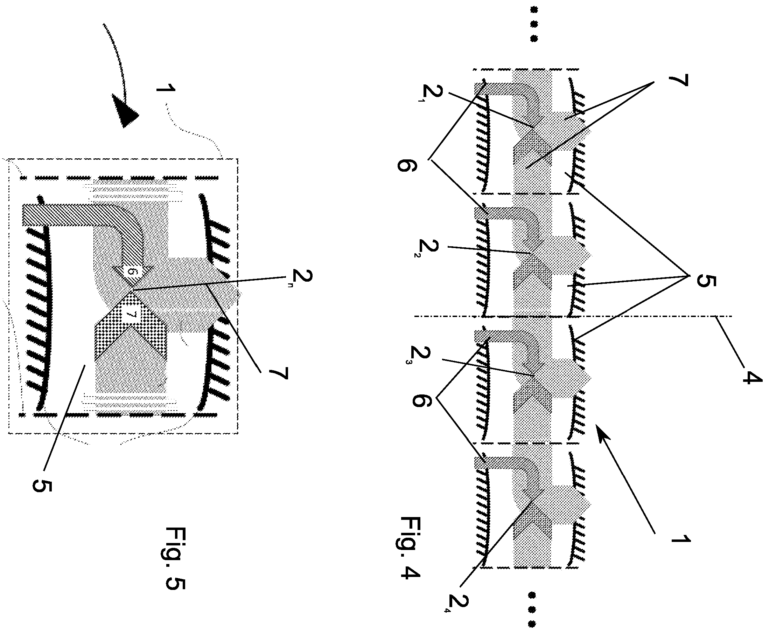

In den Fig. 4 und 5 ist eine weitere Ausführungsform der erfindungsgemäßen Vorrichtung in schematischer Ansicht dargestellt. Die Brennkammer 1 ist als torusförmiger in sich geschlossener Strömungskanal ausgebildet. Die Achse der torusförmigen Brennkammer 1 liegt koaxial zur Hauptströmrichtung 4 des Frischluftstromes 6 innerhalb der Vorrichtung, sodass die Brennkammer 1 in der Hauptströmungsrichtung 4 des Frischluftstromes 6 innerhalb der Vorrichtung angeordnet ist. Die Brennkammer 1 weist eine Anzahl von Teilsegmenten 5, bei der in Fig. 5 dargestellten Ausführungsform vier Teilsegmente 5, auf, die in Richtung der Hauptströmrichtung 4 nebeneinander angeordnet sind. Fig. 5 zeigt dabei die torusförmige Brennkammer 1 in abgewickelter Form, sodass die vier Teilsegmente 5 zweidimensional abgebildet werden. Fig. 4 zeigt dabei den in die Brennkammer 1 über den Brennkammereingang 11 eintretenden Frischluftstrom 6, der in ein Teilsegment 5 eintritt. In den Teilsegmenten 5 der Brennkammer 1 ist ein nicht dargestellter Brenner 2 angeordnet, in dem die Frischluft 6 mit Treibstoff verbrannt wird, sodass Abgas 7 aus dem Brenner 2 austritt. Durch die torusförmige Ausbildung der Brennkammer 1 sowie der Anordnung der Brenner 2 im Winkel zur Hauptströmrichtung des Frischluftstromes 6 bzw der Vorrichtung wird das Abgas 7 innerhalb der Brennkammer 1 zirkuliert, sodass jeweils ein Teil des Abgases 7 dem nachfolgenden Teilsegment 5 zugeleitet wird und in diesem wieder einem Brenner 2 mit der in das Teilsegment 5 eintretenden Frischluft 6 (Fig. 5) erneut verbrannt wird. Ein Teil der Abgase 7 wird dann über den Brennkammerausgang 12 aus der Brennkammer 1 ausgebracht und der weiteren Verarbeitung zugeführt. Durch die Vermischung der Abgase 7 mit der Frischluft 6 wird jeweils nur ein Teil der Abgase 7 innerhalb der Brennkammer 1 zirkuliert, sodass mit Frischluft 6 vermischte Abgase 7 der jeweiligen weiteren Verbrennung in einem Brenner 2 zugeführt werden kann.

Wie in den Fig. 4 und 5 dargestellt, weist die Brennkammer 1 somit eine Mehrzahl von Brennern 2ₙ auf, die derart sequentiell zueinander angeordnet sind, dass jeweils ein Teil des Abgases 6 des vorangehend angeordneten Brenners 2ₙ in den Brennereingang 21ₙ₊₁ des jeweiligen nachfolgenden Brenners 2ₙ₊₁ einströmt. Das aus dem letzten Brenner 2ₙ₊ₓ, in Fig. 5 2₄, austretende Abgas 7 tritt dann in den Brennereingang 21ₙ, bei der in Fig. 5 dargestellten Ausführungsform der Brennereingang 21₁, des zuerst bzw. ersten angeordneten Brenners 2ₙ ein.

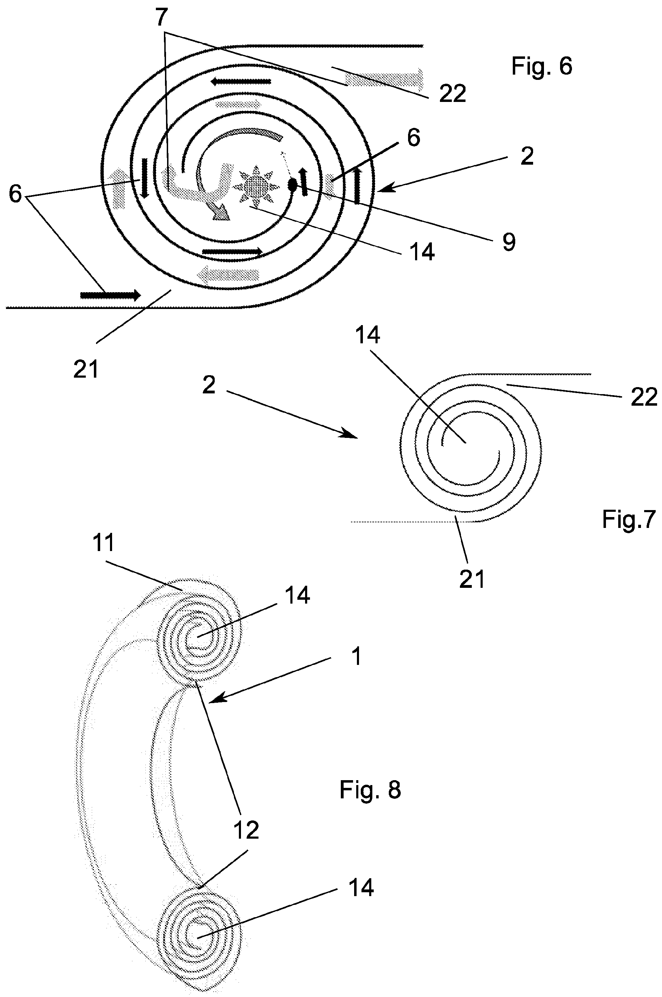

In den Fig. 6 und 7 ist eine bevorzugte Ausführungsform der Brenner 2 in schematischer Ansicht dargestellt. Der Brenner 2 ist in Form einer doppelten Spirale ausgebildet, wobei der Querschnitt des Brenners 2 eine doppelspiralförmige Ausbildung aufweist. Eine Spirale verläuft in Richtung des Zentrums 14 der Spirale und die zweite vom Zentrum 14 der ersten Spirale koaxial zu dieser nach außen. Die Frischluft 6 tritt über den Brennereingang 21 des Brenners 2 in diesen ein und vorläuft spiralförmig in Richtung des Zentrums 14 des Brenners 2. Im Zentrum des Brenners 2 wird Treibstoff über Injektionsöffnungen 9 in den Brenner 2 eingebracht und mit der Frischluft 6 verbrannt. Das Abgas 7 läuft dann spiralförmig aus dem Zentrum 14 des Brenners 2 hinaus und strömt dann aus dem Brennerausgang 22 aus dem Brenner 2 aus. Durch die spiralförmige Anordnung des Brenners 2 wird die Frischluft 6 durch die ausströmenden Abgase 7 vorgewärmt bzw. die Wandung des Brenners 2 durch die kühle einströmende Frischluft 6 herabgekühlt. Die in den Brennereingang 21 eintretende Frischluft 6 wird durch die Ablenkung innerhalb des spiralförmig ausgebildeten Brenners 2 komprimiert und beschleunigt, sodass innerhalb der spiralförmigen Struktur ein besonders vorteilhaftes Geschwindigkeits- und Druckprofil ausgebildet wird.

Wie in Fig. 8 dargestellt, kann die Brennkammer 1 vollständig als doppelspiralförmige Struktur ausgebildet sein, wobei die Frischluft 6 über den Brennkammereingang 11 einströmt, spiralförmig in das Zentrum 14 der Brennkammer 1 abgelenkt wird und im Zentrum 14 durch punktweise angeordnete Injektionsöffnungen 9 Treibstoff mit der Frischluft 6 verbrannt werden kann. Ein Teil der Abgase 7 zirkuliert sodann im Zentrum 14 der Spirale und wird somit jeweils einer weiteren Verbrennung zugeführt. Ein Teil der Abgase 7 strömt sodann über die spiralförmige Struktur der Brennkammer 1 wieder in Richtung des Brennkammerausgangs 12 und wird dort zur weiteren Verwendung in der Vorrichtung abgegeben.

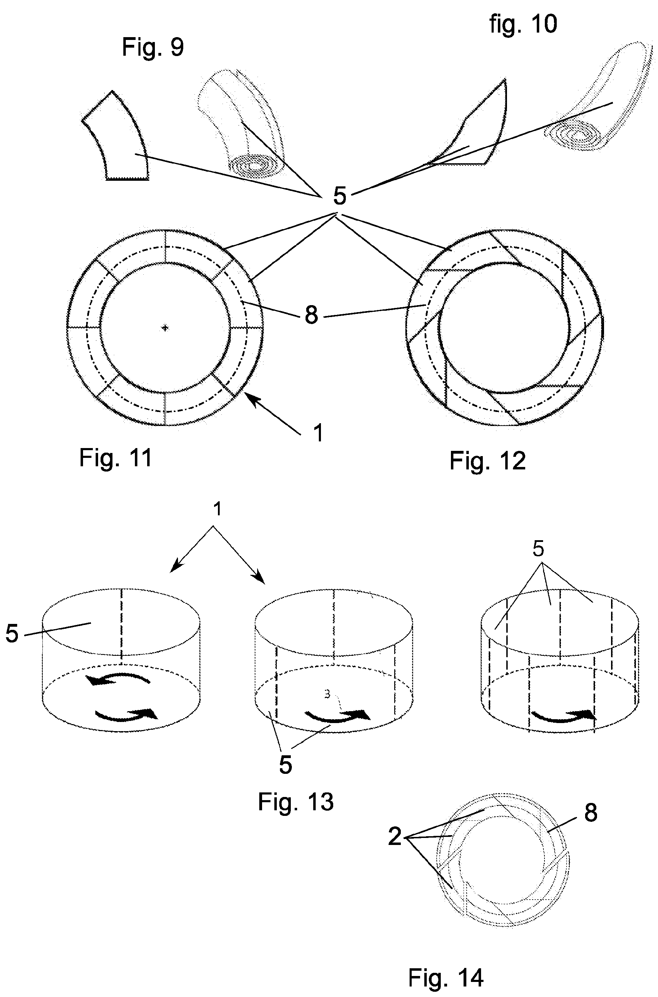

Wie in den Fig. 9 bis 12 dargestellt, kann die Brennkammer 1 aus unterschiedlichen Teilsegmenten 5 aufgebaut sein, wobei jeweils ein Teilsegment 5 beispielsweise einen wie zu Fig. 7 beschrieben als doppelspiralförmig ausgebildeten Brenner 2 (Fig. 9) aufweisen kann. Die Spiralachse des Brenners 2 bzw. der Querschnitt des Brenners 2 kann sich sodann, wie in Fig. 9 und 11 dargestellt, über einen Teil der Querschnittsachse 8 der als Strömungskanal ausgebildeten Brennkammer 1 erstrecken. Alternativ kann, wie in Fig. 10 und 12 dargestellt, der Brenner 2 auch bananenförmig entlang eines Abschnittes des Teilsegmentes 5 erstreckt ausgebildet sein, sodass durch die Verzerrung der Spiralachse des Brenners 2 unterschiedliche Abströmwinkel des Abgases 7 in die unterschiedlichen Teilsegmente 5 des Brenners 2 erzielt werden können.

Wie in Fig. 13 dargestellt, kann die Brennkammer 1 durch ein einziges Segment gebildet sein, sodass das Abgas 7 eines einzelnen Brenners 2 diesem jeweils selbst wieder zugeführt wird und dadurch ein Zirkularstrom des Abgases 7 durch einen einzigen Brenner 2 erzielt werden kann. Fig. 13 zeigt weiters die Möglichkeit unterschiedliche Anzahlen von Teilsegmenten 5 miteinander zu kombinieren, wobei in jedem Teilsegment 5 ein Brenner 2 angeordnet sein kann.

In Fig. 14 ist eine optionale Ausführungsform unterschiedlicher Brenner 2 dargestellt, wobei jeweils die Brenner 2 bei der in Fig. 14 dargestellten Ausführungsform einen doppelspiralförmigen Querschnitt aufweisen und sich entlang der Querschnittsachse 8 der torusförmigen Brennkammer 1 erstrecken und hintereinander angeordnet sind. Die Brenner 2 können, wie in Fig. 14 dargestellt, jeweils direkt aneinander angrenzen, sodass der Brennerausgang 22ₙ eines Brenners 2ₙ deckungsgleich mit dem Brennereingang 21ₙ₊₁ des nachfolgenden Brenners 2ₙ₊₁ angeordnet ist oder jeweils ein Abstand zwischen den einzelnen Brennern 2 vorgesehen ist.

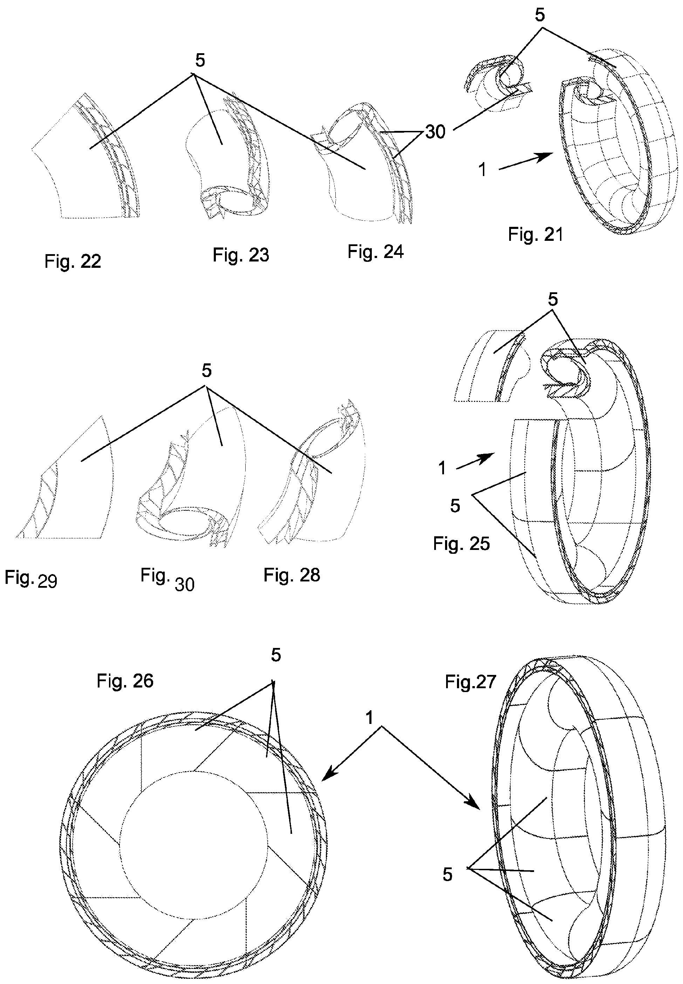

In den Fig. 21 bis 24 ist hierzu eine vorteilhafte Ausführungsforme eine Brennkammer 1 mit Teilsegmenten 5 dargestellt. Die Teilsegmente 5 und die Brennkammer 1 sind durch 3D-Druck hergestellt und weisen eine besonders leichte und gut zu erzeugende Struktur auf. Die Stützstrukturen 30 der Brennkammer 1 ermöglichen es die Struktur einfach zu erzeugen ohne viel Material zu benötigen. Weiters können die Stützstrukturen 30 entsprechen der auftretenden Kräfte in der Brennkammer 1 angepasst werden.

Die Fig. 25 bis 30 zeigen dabei entsprechend der Fig 11 bis 14 unterschiedliche Ausbildungen der Brennkammer 1 und der Teilsegmente 5. Die Teilsegmente 5 können sich dabei gekrümmt bzw in unterschiedlichen Ausbildungen entlang der Spiralachse 8 der Brennkammer 1 erstrecken.

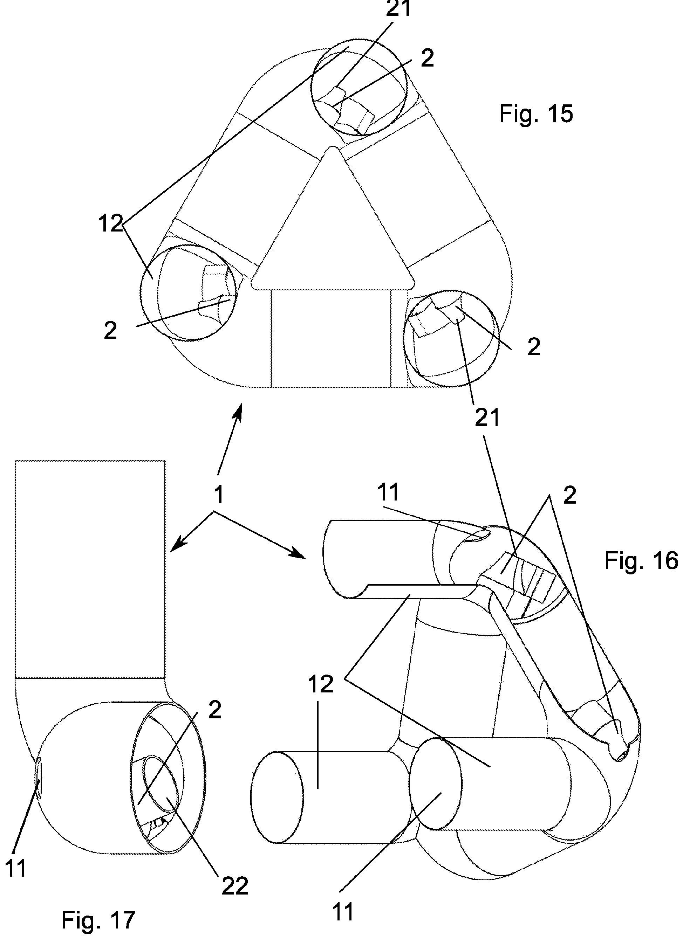

In Fig. 15 bis 17 ist eine weitere Ausführungsform der erfindungsgemäßen Vorrichtung in drei unterschiedlichen Ansichten dargestellt. Die Brennkammer 1 ist als dreieckiger Strömungskanal ausgebildet, wobei jeweils in den Ecken der dreieckigen Brennkammer 1 ein Brenner 2 angeordnet ist. Über die drei Brennkammereingänge 11 tritt Frischluft 6 in die Brennkammer 1 ein, wird den jeweiligen Brennern 2 zugeführt und in diesen mit Treibstoff verbrannt. Das aus den jeweiligen Brennern 2 austretende Abgas 7 wird sodann entlang der Brennkammer 1 durch die zur Achse der Hauptströmrichtung 4 der Frischluft geneigten Brenner 2 innerhalb der als Strömungskanal ausgebildeten Brennkammer 1 zirkuliert, sodass das Abgas 7 mit der Frischluft 6 vermischt und den jeweils nachfolgenden Brennern 2 zugeführt wird. Durch die in den Fig. 15 bis 17 dargestellte Ausführungsform wird auf einfache Weise ein Zirkularstrom wie in Fig. 17 dargestellte Abgase 7 erreicht, sodass besonders einfach eine rekursive sequentielle Verbrennung der Abgase 7 erfolgen kann. Ein Teil der Abgase 7 tritt aus dem Brennkammerausgang 12 aus, sodass jeweils innerhalb der Brennkammer 1 ein Teil der Abgase 7 mit der Frischluft 6 vermengt zirkuliert.

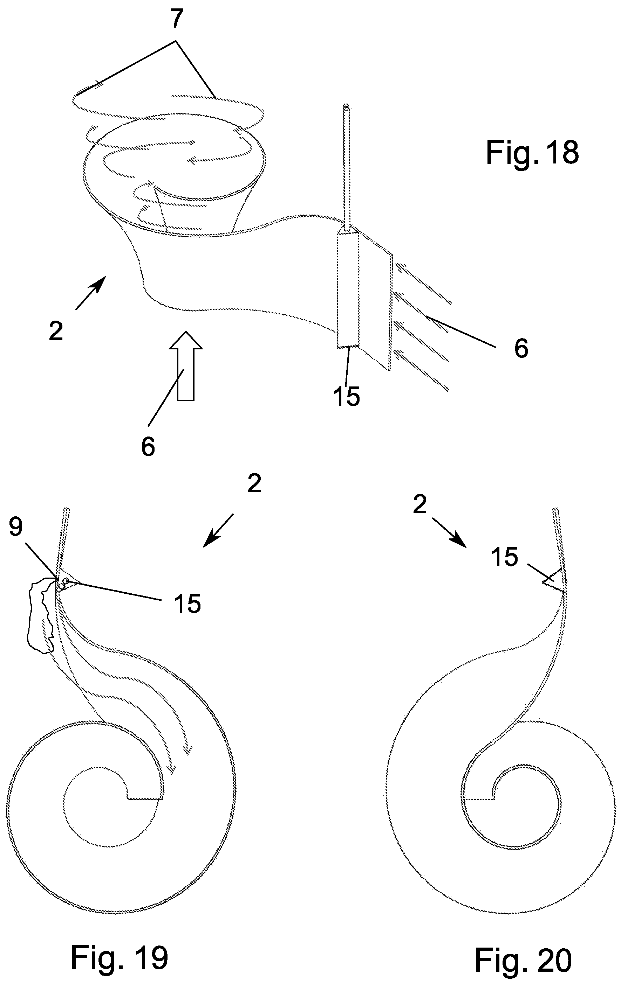

Eine weitere Optimierung der Verbrennung von Treibstoff gemischt mit Oxidationsmittel kann bei einem erfindungsgemäßen Brenner 2, wie er in Fig. 18 bis 20 dargestellt ist, optional erzielt werden, wenn der Brenners 2 als Zyklon ausgebildet ist. Detailansichten eines derartigen Zyklons beispielweise für Energiemaschinen, wie stationären Gasturbinen oder Industriebrennern, sind in den Fig. 18 bis 20 dargestellt.

Info zur Fig 18. Diese Brennerform ist besonders geeignet.

Wie in Fig. 18 bis 20 ersichtlich ist, ist eine Brennerdüse 15 mit Injektionsöffnung 9 dabei jeweils am Zugang zum Zyklon angeordnet und der Luftstrom 6 oder Oxidationsmittel gelangt tangential in den Zyklon, was durch die Pfeile am Zugang zum Zyklon angedeutet ist. Ist die Frischluft 6 in den Zyklon geströmt, wird sie axial dazu aus dem Zyklon ausgeleitet, wie dies in Fig. 18 und 20 ersichtlich ist. Innerhalb dieses Luftwirbels befindet sich die Brennerdüse 15, sodass der Luftwirbel die eingespritzten Treibstofftröpfchen mit sich reißt. Dies führt zu einer Vormischung von Luft bzw. Oxidationsmittel und Treibstoff durch Verwirbelung sowie zu einer Luftführung bzw. Luftaufsplittung. Die gute Durchmischung von Luft und Treibstofftröpfchen noch vor dem Eintritt in den Brennraum führt zu einer noch gleichmäßigeren Verbrennung, bei der weniger Gasemissionen entstehen. Durch diese Ausführungsform wird eine besonders vorteilhafte radial eingeführte Mischung zwischen der Frischluft den Abgasen und dem Treibstoff erreicht und eine besonders vorteilhafte Verwirbelung verursacht. Durch die Verwirbelung wird weiters eine Depression verursacht, die zur Ansaugung des in der Brennkammer 1 zirkulierenden Abgases 7 in den Brennereingang 11 erreicht wird.

Alternativ zu den in den Fig.1 bis 20 dargestellten Ausführungsformen kann die Brennkammer 1 auch andere Ausbildungen aufweisen, beispielsweise sechseckig, achteckig und auch oval ausgebildet sein, wobei lediglich erforderlich ist, dass innerhalb der Brennkammer 1 ein Zirkularstrom der mit Frischluft 6 vermischten Abgase 7 erreicht wird. Die Brennkammer 1 kann auch alternativ in Form eines Ringes, in Form einer in sich geschlossenen Schleife oder auch andere als die gezeigten Querschnittsformen aufweisen.

Die in den Fig. 1 bis 20 dargestellte erfindungsgemäße Vorrichtung bzw. das erfindungsgemäße Verfahren kann beispielsweise bei Gasturbinen oder Flugzeugtriebwerken eingesetzt werden, wobei die Anwendung des erfindungsgemäßen Verfahrens nicht auf diese Anwendungsformen beschränkt ist, sondern auch bei anderen beispielsweise Flugzeug- oder Hubschrauberturbinen, Propellertriebwerken oder anderen Vorrichtungen, bei denen Treibstoff verbrannt wird, Anwendung finden kann.

Eine besondere geeignete Herstellung der in den Fig.1 bis 20 dargestellten Brennern wird durch additive Fertigung erreicht.

## Patentansprüche

1. Verfahren zur gleichmäßigen rekursiven sequentiellen Verbrennung von Treibstoff und Oxidationsmittel innerhalb eines thermischen Systems mit kontinuierlicher Strömung, insbesondere einer Brennkammer (1) eines Triebwerks oder einer Gasturbine,
- wobei, insbesondere durch einen Kompressor, verdichtete Frischluft (Oxidationsmittel) durch die Brennkammer (1) entlang einer Hauptströmrichtung (4) hindurch geleitet wird, wobei die Frischluft über einen Brennkammereingang (11) einströmt und über einen Brennkammerausgang (12) ausströmt,
- wobei ein Anteil der Frischluft zumindest einem Brenner (2) über einen Brennereingang (21) zugeführt und in dem jeweiligen Brenner (2) mit Treibstoff verbrannt wird und als Abgas aus dem jeweiligen Brenner (2) an einem Brennerausgang (22) austritt,
**dadurch gekennzeichnet, dass**
der zumindest eine Brenner (2) derart, insbesondere in einem Winkel, zur Hauptströmrichtung (4) des Frischluftstroms, insbesondere geneigt, angeordnet ist, dass ein Teil des aus dem jeweiligen Brennerausgang (22) austretenden Abgases in der Brennkammer (1) eine tangentiale Strömung zur Hauptströmrichtung erfährt und in der Brennkammer (1) zirkuliert und mit der in den Brenner (2) einströmenden Frischluft vermengt in den Brennereingang (21) des, insbesondere nachgeordneten, Brenners (2) eintritt, sodass eine rekursive sequenzielle Verbrennung erreicht wird.

2. Verfahren nach Anspruch 1, **dadurch gekennzeichnet, dass** die Brennkammer (1) derart in Form eines in sich geschlossenen, insbesondere torusförmigen oder ringförmigen oder schleifenförmigen, Strömungskanals ausgebildet ist, dass sich in der Brennkammer (1) eine Zirkularströmung ausbildet, wobei insbesondere vorgesehen ist, dass die Achse der Brennkammer (1) koaxial mit der Hauptströmrichtung des Frischluftstromes angeordnet ist.

3. Verfahren nach einem der vorangehenden Ansprüche, **dadurch gekennzeichnet, dass** die Brennkammer (1) eine Anzahl von Teilsegmenten (5), insbesondere Kreissegmenten, aufweist, wobei jedes Teilsegment (5) jeweils einen Brenner (2) aufweist, und wobei jeweils ein Teil des vom jeweiligen Brenner (2) erzeugten Abgases jeweils in ein benachbartes Teilsegment (5) geleitet wird und der restliche Anteil des Abgases über den Brennkammerausgang (12) aus der Brennkammer (1) abgeführt wird.

4. Verfahren nach einem der vorangehenden Ansprüche, **dadurch gekennzeichnet, dass** die Brennkammer (1) zumindest zwei Brenner (2ₙ, 2ₙ₊₁), insbesondere eine Vielzahl von Brennern (2ₙ, 2ₙ₊₁, ... ), aufweist, die derart sequenziell zueinander angeordnet sind, dass jeweils ein Teil des Abgases des vorangehend angeordneten Brenners (2ₙ) in den Brennereingang (21ₙ₊₁) des jeweiligen Brenners (2ₙ₊₁) einströmt, wobei das aus dem Brennerausgang (22ₙ₊ₓ) des zuletzt angeordneten Brenners (2ₙ₊ₓ) austretende Abgas in den Brennereingang (21ₙ) des zuerst angeordneten Brenners (2ₙ) einströmt.

5. Verfahren nach einem der vorangehenden Ansprüche, **dadurch gekennzeichnet, dass** der Brenner (2), insbesondere Helix-förmig ausgebildet ist und, einen Querschnitt in Form einer doppelten Spirale aufweist, wobei die, insbesondere mit einem Teil des Abgases vermischte, Frischluft am Brennereingang (21) des Brenners (2) spiralförmig in das Zentrum des Brenners (2) geleitet wird, wobei der Treibstoff durch Injektionsöffnungen (9) im Bereich des Zentrums des spiralförmig ausgebildeten Brenners (2) eingespritzt und mit der Frischluft verbrannt wird, und wobei das Abgas spiralförmig aus dem Zentrum des spiralförmig ausgebildeten Brenners (2) zum Brennerausgang (22) geleitet wird.

6. Verfahren nach Anspruch 5, **dadurch gekennzeichnet, dass** sich die Spiralachse des Brenners (2) zumindest entlang eines Teils der Querschnittsachse (8), insbesondere entlang der gesamten Querschnittsachse (8), des Brennraums (1) erstreckt.

7. Verfahren nach einem der vorangehenden Ansprüche, **dadurch gekennzeichnet, dass** das Verhältnis, insbesondere das Impulsstromverhältnis, zwischen der in den Brenner (2) eintretenden Frischluft zum in den Brenner (2) geleiteten Abgas zwischen 1:1 bis 20:1, insbesondere 2:1 bis 10:1, besonders bevorzugt 5:1 beträgt, wobei insbesondere das Impulsstromverhältnis der Massendurchfluss mal der Durchflussgeschwindigkeit durch die Querschnittsfläche geteilt ist.

8. Vorrichtung für ein thermisches System mit kontinuierlicher Strömung, insbesondere eine Brennkammer (1) eines Triebwerks oder eine Gasturbine, zur gleichmäßigen rekursiven sequentiellen Verbrennung von Treibstoff und Oxidationsmittel, insbesondere nach einem Verfahren der Ansprüche 1 bis 7,
- wobei die Vorrichtung eine Brennkammer (1) aufweist, wobei die Brennkammer (1) einen Brennkammereingang (11) und einen Brennkammerausgang (12) aufweist, wobei insbesondere durch einen Kompressor, verdichtete Frischluft (Oxidationsmittel) über den Brennkammereingang (21) in die Brennkammer (1) hinein, entlang einer Hauptströmrichtung (4) der Vorrichtung die Brennkammer (1) hindurch und über einen Brennkammerausgang (22) aus der Brennkammer (1) beförderbar ist,
- wobei die Brennkammer (1) zumindest einen Brenner (2) mit einem Brennereigang (21) und einem Brennerausgang (22) aufweist, dem ein Anteil der Frischluft über den Brennereingang (21) zuführbar ist, wobei in dem jeweiligen Brenner (2) über zumindest eine Injektionsöffnung (23) eingebrachter Treibstoff verbrennbar ist und als Abgas aus dem jeweiligen Brenner (2) an einem Brennerausgang (22) aus dem Brenner (2) ausbringbar ist,
**dadurch gekennzeichnet, dass**
der zumindest eine Brenner (2) derart, insbesondere in einem Winkel zur Hauptströmrichtung (4) der Vorrichtung, vorzugsweise geneigt, angeordnet ist, dass ein Teil des aus dem jeweiligen Brennerausgang (22) austretenden Abgases in der Brennkammer (1) eine tangentiale Strömung zur Hauptströmrichtung erfährt und in der Brennkammer (1) zirkuliert und mit der in den Brenner (2) einströmenden Frischluft vermengt in den Brennereingang (21) des, insbesondere nachgeordneten, Brenners (2) eintritt, sodass eine rekursive sequenzielle Verbrennung erreicht wird.

9. Vorrichtung nach Anspruch 8, **dadurch gekennzeichnet, dass** die Brennkammer (1) derart in Form eines in sich geschlossenen, insbesondere torusförmigen oder ringförmigen oder schleifenförmigen, Strömungskanals ausgebildet ist, dass sich in der Brennkammer (1) eine Zirkularströmung ausbildet, wobei insbesondere vorgesehen ist, dass die Achse der Brennkammer (1) koaxial mit der Hauptströmrichtung (4) der Vorrichtung angeordnet ist.

10. Vorrichtung nach Anspruch 8 oder 9, **dadurch gekennzeichnet, dass** die Brennkammer (1) eine Anzahl von Teilsegmenten (5), insbesondere Kreissegmenten, aufweist, wobei jedes Teilsegment (5) jeweils einen Brenner (2) umfasst, und wobei die Brennkammer (1) derart, ausgebildet ist, dass ein Teil des vom jeweiligen Brenner (2) erzeugten Abgases, insbesondere mittels der als Strömungskanal ausgebildeten Brennkammer (1) oder mittels Strömungsleitelementen (9), jeweils in ein benachbartes Teilsegment (5) leitbar ist und der restliche Anteil des Abgases über den Brennkammerausgang (12) aus der Brennkammer (1) abführbar ist.

11. Vorrichtung nach einem der Ansprüche 8 bis 10, **dadurch gekennzeichnet, dass** die Brennkammer (1) zumindest zwei Brenner (2ₙ, 2ₙ₊₁), insbesondere eine Vielzahl von Brennern (2ₙ, 2ₙ₊₁, ... ), aufweist, die derart sequenziell zueinander angeordnet sind, dass jeweils ein Teil des Abgases des vorangehend angeordneten Brenners (2ₙ) in den Brennereingang (21ₙ₊₁) des diesem jeweils nachgeordnetem Brenners (2ₙ₊₁) einströmt, wobei das aus dem Brennerausgang (22ₙ₊ₓ) des zuletzt angeordneten Brenners (2ₙ₊ₓ) austretende Abgas in den Brennereingang (21ₙ) des zuerst angeordneten Brenners (2ₙ) einströmt.

12. Vorrichtung nach einem der Ansprüche 8 bis 11, **dadurch gekennzeichnet, dass** der Brenner (2), insbesondere Helix-förmig ausgebildet ist und, einen Querschnitt in Form einer doppelten Spirale aufweist, wobei der Brenner (2) derart spiralförmig ausgebildet ist, dass die, insbesondere mit einem Teil des Abgases vermischte, Frischluft am Brennereingang (21) des Brenners (2) spiralförmig in das Zentrum des Brenners (2) leitbar ist, wobei der Treibstoff durch Injektionsöffnungen (9) im Bereich des Zentrums der spiralförmig ausgebildeten Brenners (2) einspritzbar und mit der Frischluft verbrennbar ist, und wobei das Abgas spiralförmig aus dem Zentrum des spiralförmig ausgebildeten Brenners (2) zum Brennerausgang (23) leitbar ist.

13. Vorrichtung nach Anspruch 12, **dadurch gekennzeichnet, dass** sich die Spiralachse des Brenners (2) zumindest entlang eines Teils der Querschnittsachse (8), insbesondere entlang der gesamten Querschnittsachse (8), der Brennkammer (1) erstreckt.

14. Vorrichtung nach einem der Ansprüche 8 bis 13, **dadurch gekennzeichnet, dass** der Brenner (2) als Drallerzeuger, Wirbelgenerator oder Zyklon ausgebildet ist.

15. Triebwerk umfassend eine Vorrichtung nach einem der Ansprüche 8 bis 14.

16. Gasturbine umfassend eine Vorrichtung nach einem der Ansprüche 8 bis 14.

## Claims

1. Method for the uniform recursive sequential combustion of fuel and oxidizing agent within a thermal system with continuous flow, in particular a combustion chamber (1) of an engine or a gas turbine,
- wherein, in particular by a compressor, compressed fresh air (oxidizing agent) is passed through the combustion chamber (1) along a primary flow direction (4), wherein the fresh air flows in via a combustion chamber inlet (11) and out via a combustion chamber outlet (12),
- wherein a portion of the fresh air is supplied to at least one burner (2) via a burner inlet (21) and is burned with fuel in the respective burner (2) and exits as exhaust gas from the respective burner (2) at a burner outlet (22),
**characterized in that**
the at least one burner (2) is arranged, in particular at an angle, to the primary flow direction (4) of the fresh air flow, in particular with an inclination, such that a portion of the exhaust gas escaping from the respective burner outlet (22) experiences a tangential flow relative to the primary flow direction in the combustion chamber (1) and circulates in the combustion chamber (1) and, mixed with the fresh air flowing into the burner (2), enters the burner inlet (21) of the burner (2), in particular the downstream burner, so that recursive sequential combustion is achieved.

2. Method according to claim 1, **characterized in that** the combustion chamber (1) is configured in the form of a closed flow duct, in particular a torus-shaped or ring-shaped or loop-shaped flow duct, such that a circular flow is generated in the combustion chamber (1), wherein it is provided in particular that the axis of the combustion chamber (1) is arranged to be coaxial to the primary flow direction of the fresh air flow.

3. Method according to any one of the preceding claims, **characterized in that** the combustion chamber (1) has a number of sub-segments (5), in particular circular segments, wherein each sub-segment (5) has a burner (2), and wherein a respective portion of the exhaust gas produced by the respective burner (2) is conducted into an adjacent sub-segment (5) and the remaining portion of the exhaust gas is discharged from the combustion chamber (1) via the combustion chamber outlet (12).

4. Method according to any one of the preceding claims, **characterized in that** the combustion chamber (1) has at least two burners (2ₙ, 2ₙ₊₁), in particular a plurality of burners (2ₙ, 2ₙ₊₁...), which are arranged sequentially to each other such that a portion of the exhaust gas from the upstream burner (2ₙ) flows into the burner inlet (21ₙ₊₁) of the respective burner (2ₙ₊₁), wherein the exhaust gas exiting from the burner outlet (22ₙ₊ₓ) of the last-arranged burner (2ₙ₊ₓ) flows into the burner inlet (21ₙ) of the first-arranged burner (2ₙ).

5. Method according to any one of the preceding claims, **characterized in that** the burner (2) is configured in particular to be helical and has a cross-section in the form of a double spiral, wherein the fresh air, mixed in particular with a portion of the exhaust gas, is conducted in a spiral into the center of the burner (2) at the burner inlet (21) of the burner (2), wherein the fuel is injected through injection openings (9) in the region of the center of the spiral-shaped burner (2) and is burned with the fresh air, and wherein the exhaust gas is guided in a spiral from the center of the spiral-shaped burner (2) to the burner outlet (22).

6. Method according to claim 5, **characterized in that** the spiral axis of the burner (2) extends at least along a portion of the cross-sectional axis (8), in particular along the entire cross-sectional axis (8), of the combustion chamber (1).

7. Method according to any one of the preceding claims, **characterized in that** the ratio, in particular the pulse flow ratio, between the fresh air entering the burner (2) and the exhaust gas conducted into the burner (2) is between 1:1 and 20:1, in particular 2:1 to 10:1, most preferably 5:1, wherein in particular the pulse flow ratio is the mass flow rate multiplied by the flow velocity through the cross-sectional area.

8. Device for a thermal system with continuous flow, in particular a combustion chamber (1) of an engine or a gas turbine, for the uniform recursive sequential combustion of fuel and oxidizing agent, in particular according to a method of claims 1 to 7,
- wherein the device has a combustion chamber (1), wherein the combustion chamber (1) has a combustion chamber inlet (11) and a combustion chamber outlet (12), wherein, in particular by means of a compressor, compressed fresh air (oxidizing agent) can be conveyed into the combustion chamber (1) via the combustion chamber inlet (21) along a primary flow direction (4) of the device through the combustion chamber (1) and out of the combustion chamber (1) via a combustion chamber outlet (22),
- wherein the combustion chamber (1) has at least one burner (2) with a burner inlet (21) and a burner outlet (22), to which a portion of the fresh air can be supplied via the burner inlet (21), wherein fuel introduced into the respective burner (2) via at least one injection opening (23) is combustible and can be discharged as exhaust gas out of the respective burner (2) at a burner outlet (22) from the burner (2),
**characterized in that**
the at least one burner (2) is arranged, in particular at an angle to the primary flow direction (4) of the device, preferably with an inclination, such that a portion of the exhaust gas escaping from the respective burner outlet (22) experiences a tangential flow relative to the primary flow direction in the combustion chamber (1) and circulates in the combustion chamber (1) and, mixed with the fresh air flowing into the burner (2), enters the burner inlet (21) of the burner (2), in particular the downstream burner, so that recursive sequential combustion is achieved.

9. Device according to claim 8, **characterized in that** the combustion chamber (1) is configured in the form of a closed flow duct, in particular a torus-shaped or ring-shaped or loop-shaped flow duct, such that a circular flow is generated in the combustion chamber (1), wherein it is provided in particular that the axis of the combustion chamber (1) is arranged to be coaxial to the primary flow direction (4) of the device.

10. Device according to claim 8 or 9, **characterized in that** the combustion chamber (1) has a number of sub-segments (5), in particular circular segments, wherein each sub-segment (5) comprises a respective burner (2), and wherein the combustion chamber (1) is configured such that a portion of the exhaust gas produced by the respective burner (2) can be conducted, in particular by means of the combustion chamber (1) configured as a flow duct or by means of flow guide elements (9), into an adjacent sub-segment (5) and the remaining portion of the exhaust gas can be discharged from the combustion chamber (1) via the combustion chamber outlet (12).

11. Device according to any one of claims 8 to 10, **characterized in that** the combustion chamber (1) has at least two burners (2ₙ, 2ₙ₊₁), in particular a plurality of burners (2ₙ, 2ₙ₊₁...), which are arranged sequentially to each other such that a portion of the exhaust gas from the upstream burner (2ₙ) flows into the burner inlet (21ₙ₊₁) of the burner arranged downstream thereof (2ₙ₊₁), wherein the exhaust gas exiting from the burner outlet (22ₙ₊ₓ) of the last-arranged burner (2ₙ₊ₓ) flows into the burner inlet (21ₙ) of the first-arranged burner (2ₙ).

12. Device according to any one of claims 8 to 11, **characterized in that** the burner (2) is configured in particular to be helical and has a cross-section in the form of a double spiral, wherein the burner (2) is spiral-shaped such that the fresh air, mixed in particular mixed with a portion of the exhaust gas, at the burner inlet (21) of the burner (2) can flow in a spiral into the center of the burner (2), wherein the fuel can be injected through injection openings (9) in the region of the center of the spiral-shaped burner (2) and can be burned with the fresh air, and wherein the exhaust gas can be conducted in a spiral from the center of the spiral-shaped burner (2) to the burner outlet (23).

13. Device according to claim 12, **characterized in that** the spiral axis of the burner (2) extends at least along a portion of the cross-sectional axis (8), in particular along the entire cross-sectional axis (8), of the combustion chamber (1).

14. Device according to any one of claims 8 to 13, **characterized in that** the burner (2) is configured as a swirl generator, vortex generator or cyclone.

15. Engine comprising a device according to any one of claims 8 to 14.

16. Gas turbine comprising a device according to any one of claims 8 to 14.

## Revendications

1. Procédé de combustion séquentielle récursive uniforme de carburant et d'agent oxydant à l'intérieur d'un système thermique avec écoulement continu, en particulier d'une chambre de combustion (1) d'un groupe de propulsion ou d'une turbine à gaz,
- dans lequel de l'air frais (agent oxydant) comprimé, en particulier par un compresseur, est guidé à travers la chambre de combustion (1) le long d'une direction d'écoulement principale (4), dans lequel l'air frais s'écoule par une entrée de chambre de combustion (11) et sort par une sortie de chambre de combustion (12),
- dans lequel une part de l'air frais est amenée à au moins un brûleur (2) par une entrée de brûleur (21) et brûlée avec du carburant dans le brûleur (2) respectif et sort en tant que gaz d'échappement du brûleur (2) respectif au niveau d'une sortie de brûleur (22),
**caractérisé en ce que**
au moins un brûleur (2) est disposé, en particulier incliné, en particulier à un angle par rapport à la direction d'écoulement principale (4) du flux d'air frais de sorte qu'une partie des gaz d'échappement sortant de la sortie de brûleur (22) respective subisse dans la chambre de combustion (1) un écoulement tangentiel par rapport à la direction d'écoulement principale et circule dans la chambre de combustion (1) et, mélangé à l'air frais pénétrant dans le brûleur (2), entre dans l'entrée de brûleur (21) du brûleur (2), en particulier en aval, de sorte qu'une combustion séquentielle récursive soit obtenue.

2. Procédé selon la revendication 1, **caractérisé en ce que** la chambre de combustion (1) est conçue sous forme d'un canal d'écoulement fermé, en particulier toroïdal ou annulaire ou en boucle, de sorte qu'un écoulement circulaire se forme dans la chambre de combustion (1), dans lequel l'axe de la chambre de combustion (1) est en particulier disposé coaxialement à la direction d'écoulement principale du flux d'air frais.

3. Procédé selon l'une quelconque des revendications précédentes, **caractérisé en ce que** la chambre de combustion (1) présente un certain nombre de segments partiels (5), en particulier des segments circulaires, dans lequel chaque segment partiel (5) présente respectivement un brûleur (2), et dans lequel une partie des gaz d'échappement générés par le brûleur (2) respectif est guidée vers un segment partiel adjacent (5), et la part restante des gaz d'échappement est évacuée de la chambre de combustion (1) par la sortie de chambre de combustion (12).

4. Procédé selon l'une quelconque des revendications précédentes, **caractérisé en ce que** la chambre de combustion (1) présente au moins deux brûleurs (2ₙ, 2ₙ₊₁), en particulier une pluralité de brûleurs (2ₙ, 2ₙ₊₁...), qui sont disposés séquentiellement les uns par rapport aux autres de sorte qu'une partie des gaz d'échappement du brûleur (2ₙ) précédemment disposé s'écoule dans l'entrée de brûleur (21ₙ₊₁) du brûleur (2ₙ₊₁) respectif, dans lequel les gaz d'échappement sortant de la sortie de brûleur (22ₙ₊ₓ) du brûleur (2ₙ₊ₓ) disposé en dernier s'écoule dans l'entrée de brûleur (21ₙ) du brûleur (2ₙ) disposé en premier.

5. Procédé selon l'une quelconque des revendications précédentes, **caractérisé en ce que** le brûleur (2) est conçu pour être en particulier hélicoïdal et présente une section transversale en forme de double spirale, dans lequel l'air frais, en particulier mélangé à une partie des gaz d'échappement, est guidé en spirale vers le centre du brûleur (2) au niveau de l'entrée de brûleur (21) du brûleur (2), dans lequel le carburant est injecté via des ouvertures d'injection (9) dans la zone du centre du brûleur (2) en spirale et est brûlé avec l'air frais, et dans lequel les gaz d'échappement sont guidés en spirale du centre du brûleur (2) conçu en forme de spirale vers la sortie de brûleur (22) du brûleur.

6. Procédé selon la revendication 5, **caractérisé en ce que** l'axe en spirale du brûleur (2) s'étend au moins le long d'une partie de l'axe transversal (8), en particulier le long de l'ensemble de l'axe transversal (8), de la chambre de combustion (1).

7. Procédé selon l'une quelconque des revendications précédentes, **caractérisé en ce que** le rapport, en particulier le rapport des flux de quantité de mouvement, entre l'air frais entrant dans le brûleur (2) et les gaz d'échappement guidés vers le brûleur (2) est entre 1:1 et 20:1, en particulier entre 2:1 et 10:1, de préférence 5:1, dans lequel en particulier le rapport des flux de quantité de
mouvement est le débit massique multiplié par la vitesse d'écoulement à travers la section transversale.

8. Dispositif pour un système thermique avec écoulement continu, en particulier une chambre de combustion (1) d'un groupe de propulsion ou d'une turbine à gaz, pour la combustion séquentielle récursive uniforme de carburant et d'agent oxydant, en particulier selon un procédé selon les revendications 1 à 7,
- dans lequel le dispositif présente une chambre de combustion (1), dans lequel la chambre de combustion (1) présente une entrée de chambre de combustion (11) et une sortie de chambre de combustion (12), dans lequel en particulier de l'air frais (agent oxydant) comprimé, en particulier par un compresseur, peut être transporté dans la chambre de combustion (1) par l'entrée de chambre de combustion (21), le long d'une direction d'écoulement principale (4) du dispositif à travers et hors de la chambre de combustion (1) par une sortie de chambre de combustion (22) de la chambre de combustion (1),
- dans lequel la chambre de combustion (1) présente au moins un brûleur (2) avec une entrée de brûleur (21) et une sortie de brûleur (22) à laquelle une part de l'air frais peut être amenée par l'entrée de brûleur (21), dans lequel le carburant introduit dans le brûleur (2) respectif par la au moins une ouverture d'injection (23) peut être brûlé et peut être évacué du brûleur (2) respectif en tant que gaz d'échappement au niveau d'une sortie de brûleur (22) brûleur (2),
**caractérisé en ce que**
le au moins un brûleur (2) est disposé, de préférence incliné, en particulier à un angle par rapport à la direction d'écoulement principale (4) du dispositif de sorte qu'une partie des gaz d'échappement sortant de la sortie de brûleur (22) respective subisse dans la chambre de combustion (1) un écoulement tangentiel par rapport à la direction d'écoulement principale et circule dans la chambre de combustion (1) et, mélangé à l'air frais s'écoulant dans le brûleur (2), entre dans l'entrée de brûleur (21) du brûleur (2), en particulier en aval, de sorte qu'une combustion séquentielle récursive soit obtenue.

9. Dispositif selon la revendication 8, **caractérisé en ce que** la chambre de combustion (1) est conçue sous forme d'un canal d'écoulement fermé, en particulier toroïdal ou annulaire ou en boucle, de sorte qu'un écoulement circulaire se forme dans la chambre de combustion (1), dans lequel l'axe de la chambre de combustion (1) est en particulier disposé coaxialement à la direction d'écoulement principale (4) du dispositif.

10. Dispositif selon la revendication 8 ou 9, **caractérisé en ce que** la chambre de combustion (1) présente un certain nombre de segments partiels (5), en particulier des segments circulaires, dans lequel chaque segment partiel (5) comprend respectivement un brûleur (2), et dans lequel la chambre de combustion (1) est conçue de sorte qu'une partie des gaz d'échappement générés par le brûleur respectif (2) puisse être guidée, en particulier au moyen de la chambre de combustion (1) conçue en tant que canal d'écoulement ou au moyen d'éléments de guidage d'écoulement (9), vers un segment partiel adjacent (5), et la part restante des gaz d'échappement peut être évacuée de la chambre de combustion (1) par la sortie de chambre de combustion (12).

11. Dispositif selon l'une quelconque des revendications 8 à 10, **caractérisé en ce que** la chambre de combustion (1) présente au moins deux brûleurs (2ₙ, 2ₙ₊₁), en particulier une pluralité de brûleurs (2ₙ, 2ₙ₊₁...), qui sont disposés séquentiellement les uns par rapport aux autres de sorte qu'une partie des gaz d'échappement du brûleur (2ₙ) précédemment disposé s'écoule dans l'entrée de brûleur (21ₙ₊₁) de ce brûleur (2ₙ₊₁) respectif disposé en aval, dans lequel les gaz d'échappement sortant de la sortie de brûleur (22ₙ₊ₓ) du brûleur (2ₙ₊ₓ) disposé en dernier s'écoule dans l'entrée de brûleur (21ₙ) du brûleur (2ₙ) disposé en premier.

12. Dispositif selon l'une quelconque des revendications 8 à 11, **caractérisé en ce que** le brûleur (2) est conçu pour être en particulier hélicoïdal et présente une section transversale en forme de double spirale, dans lequel le brûleur (2) est conçu en forme de spirale, de sorte que l'air frais, en particulier mélangé à une partie des gaz d'échappement, puisse être guidé en spirale vers le centre du brûleur (2) au niveau de l'entrée de brûleur (21) du brûleur (2), dans lequel le carburant peut être injecté via des ouvertures d'injection (9) dans la zone du centre du brûleur (2) en spirale et peut être brûlé avec l'air frais, et dans lequel les gaz d'échappement peuvent être guidés en spirale du centre du brûleur (2) conçu en forme de spirale vers la sortie de brûleur (23) du brûleur.

13. Dispositif selon la revendication 12, **caractérisé en ce que** l'axe en spirale du brûleur (2) s'étend au moins le long d'une partie de l'axe transversal (8), en particulier le long de l'ensemble de l'axe transversal (8), de la chambre de combustion (1).

14. Dispositif selon l'une quelconque des revendications 8 à 13, **caractérisé en ce que** le brûleur (2) est conçu en tant que générateur de tourbillons, générateur de vortex ou cyclone.

15. Groupe de propulsion comprenant un dispositif selon l'une quelconque des revendications 8 à 14.

16. Turbine à gaz comprenant un dispositif selon l'une quelconque des revendications 8 à 14.
